# EUROPÄISCHE PATENTSCHRIFT

(11) **EP 1 381 437 B1**
(45) Veröffentlichungstag und Bekanntmachung des Hinweises auf die Patenterteilung: **30.07.2008**
(21) Anmeldenummer: 02737936.1
(22) Anmeldetag: 09.04.2002
(51) Int. Cl.: A63H 30/04, A63F 13/00, A63H 30/00, A63H 18/00

(54) **MOBILTELEFON, DATENVERARBEITUNGSANLAGE ODER SPIELCOMPUTER UND REALES, BEWEGBARES SPIELZEUG**
MOBILE TELEPHONE, DATA PROCESSING SYSTEM OR GAME COMPUTER AND A REAL MOBILE TOY
TELEPHONE PORTABLE, INSTALLATION DE TRAITEMENT DE DONNEES OU CONSOLE DE JEUX ET JOUET REEL MOBILE

(30) Priorität: 23.04.2001 DE 10119771; 08.06.2001 DE 20109595 U
(43) Veröffentlichungstag der Anmeldung: 21.01.2004
(73) Patentinhaber: Stadlbauer, Andreas, 5061 Elsbethen (AT)
(72) Erfinder: Stadlbauer, Andreas, 5061 Elsbethen (AT)
(74) Vertreter: Kandlbinder, Markus Christian
(86) Internationale Anmeldenummer: PCT/EP2002/003961
(87) Internationale Veröffentlichungsnummer: WO 2002/085480

(56) Entgegenhaltungen:
- EP-A- 0 898 237
- WO-A-01/95988
- DE-C- 19 923 105
- US-A- 4 817 948
- PATENT ABSTRACTS OF JAPAN vol. 2000, no. 15, 6. April 2001 (2001-04-06) -& JP 2000 334163 A (CASIO COMPUT CO LTD), 5. Dezember 2000 (2000-12-05)
- PATENT ABSTRACTS OF JAPAN vol. 1995, no. 10, 30. November 1995 (1995-11-30) -& JP 07 178235 A (CASIO COMPUT CO LTD), 18. Juli 1995 (1995-07-18)

## Beschreibung

Die Erfindung betrifft eine Datenverarbeitungsanlage gemäß dem Oberbegriff des Anspruchs 1 sowie ein Spielzeug gemäß dem Oberbegriff des Anspruchs 17.

Durch entsprechende Steuerungen bzw. Fernsteuerungen bewegbare Spielzeuge gewinnen bei Kindern zunehmend an Popularität, da derartige Spielzeuge ein immer realistischeres Nachspielen von realen Situationen erlauben.

Andererseits sind Computer und insbesondere Spielcomputer oder Spielkonsoten, wie beispielsweise der sogen. Game-Boy, nicht mehr aus den Kinderzimmern. wegzudenken. Sogar Mobiltelefone sind inzwischen mit Spielsoftware ausgestattet und werden zum Zeitvertreib als Spielkonsole auch von Kindern, benutzt. Durch das Spiel soll die geistige und körperliche Entwicklung des Kindes gefördert werden. Insbesondere bereitet das Spielen die Kinder auf ihr späteres selbständiges Leben vor und trainiert deren geistige und körperliche Fähigkeiten. Daher sollte Spielzeug für Kinder vielseitig und die Kindesentwicklung unterstützend ausgebildet sein. Manche Spielzeuge sind jedoch oftmals in ihren Anforderungen zu einseitig und trainieren beispielsweise nur bestimmte motorische Fertigkeiten oder nur bestimmte geistige Fertigkeiten. Ferner wünschen Kinder oftmals eine noch größere Realitätsnähe beim Nachspielen von realen, ggf. selbst erlebten Situationen.

Aus PATENT ABSTRACTS OF JAPAN vol. 2000 No. 15, 16. April 2001 (2001.04-06) ist eine Tiernachbildung bekannt, die über eine Funkverbindung mit einem Terminal verbunden ist. Dieses Terminal dient dazu, über Eingaben ein "sich um das Tier Kümmern" zu simulieren und aufzuzeichnen. Es soll hiermit simuliert werden, daß sich die Tiernachbildung um so besser fühlt, je mehr sich der Benutzer mittels Eingaben am Terminal um die Tiernachbildung kümmert. Durch von einem simulierten Gemütszustand der Tiernachbildung bestimmten Aktionen wird der Spieler für seine Eingaben belohnt. Ziel dieser Erfindung ist es, eine Verhalten des Tieres möglichst autonom nachzubilden, so daß der Spieler den Eindruck erhält, er hat es mit einem Tier mit eigenem Willen und Geist zu tun.

Aus DE 199 23 105 C1 ist ein System zur Steuerung eines Modellflugzeugs bekannt, bei dem an dem Modellflugzeug eine Bilderfassungseinrichtung angeordnet ist, welche das erfaßte Bild an eine im Bereich des Bedieners angeordnete Einrichtung zum Darstellen des erfaßten Bildes überträgt. Hierdurch kann der Bediener das Modellflugzeug anhand des erfaßten Bildes steuern, ohne daß ein direkter Sichtkontakt zwischen Bediener und Modellflugzeug gegeben ist. Zur Bildübertragung wird beispielsweise auch eine Tetekommunikationsetnrichtung, insbesondere ein Mobiltelefon, vorgeschlagen.

Aus PATENT ABSTRACTS OF JAPAN Bd. 1995, Nr. 10, 30. November 1995 und JP-A-07178235 ist es bekannt, dass ein Bild von einem ferngesteuerten Spielzeug auf eine Fernsteuerung übertragen und dort in Echtzeit dargestellt wird, um einen Eindruck wie bei einem echten Hubschrauber oder Rennauto, in dem der Pilot selbst sitzt, zu erhalten. Die Fernsteuerung ist mit einem Softwarespeicher verbindbar, um ein Spielabbild auf dem Display der Fernsteuerung anzuzeigen, so dass ein Spiel auf der Fernsteuerung gespielt werden kann. Die vorliegende Erfindung unterscheidet sich wesentlich dadurch, dass der Spielablauf in Abhängigkeit von Rückmeldungen seitens des bewegbaren Spielzeuges erfolgt und reale Bewegungen des bewegbaren Spielzeuges einbezieht, wie im Kennzeichen des Anspruchs 1 der vorliegenden Patentanmeldung.

Der Erfindung liegt die Aufgabe zugrunde, ein Spielzeug zur Verfügung zu stellen, welches spielende Kinder vielseitig fordert und trainiert.

Diese Aufgabe wird durch eine Datenverarbeitungsanlage der o.g. Art mit den in Anspruch 1 gekennzeichneten Merkmalen sowie durch ein Spielzeug der o.g. Art mit den in Anspruch 17 gekennzeichneten Merkmalen gelöst. Vorteilhafte Ausgestaltungen hiervon sind in den weiteren Ansprüchen beschrieben.

Bei einer Datenverarbeitungsanlage der o.g. Art ist es erfindungsgemäß vorgesehen, daß die Datenverarbeitungsanlage mit dem Datenverarbeitungsprogramm als eine manuelle, über Benutzereingaben an der Eingabevorrichtung steuerbare Steuereinrichtung des bewegten Spielzeuges ausgebildet ist und daß die Datenverarbeitungsanlage sowie das Datenverarbeitungsprogramm derart ausgebildet sind, daß auf der Ausgabevorrichtung eine Simulation einer virtuellen Umgebung und/oder virtueller Parameter des bewegten Spielzeuges kombiniert mit einem Spielablauf zum Durchspielen durch den Benutzer zur Verfügung gestellt ist, wobei der Spielablauf in Abhängigkeit von Benutzereingaben und von Rückmeldungen seitens des bewegbaren Spielzeugs über die Eingabevorrichtung, erfolgt und reale Bewegungen des bewegbaren Spielzeuges einbezieht.

Ein Spielzeug der o.g. Art ist erfindungsgemäß mit einer Steuerung in Form einer zuvor beschriebenen Datenverarbeitungsanlage ausgestattet.

Der Kern der Erfindung liegt dabei darin, die Datenverarbeitungsanlage mit einem realen, bewegbaren Spielzeug, wie beispielsweise einer Puppe, einem RC-Car, einer spurgeführten Autorennbahn oder einer Tiernachbildung, zu kombinieren und dieses reale Spielzeug in ein Computerspiel, welches auf dem Mobiltelefon oder dem Computer abläuft, zu integrieren. Es:wird in besonders spannender und aufregender Weise eine virtuelle Welt im Spielcomputer mit der realen Welt bzw. realen Aktionen des Spielzeugs verknüpft.

Dies hat den Vorteil, daß dem spielenden Kind nicht nur eine virtuelle Umgebung sondern gleichzeitig eine reale Umgebung für das Spiel zur Verfügung gestellt wird. Dadurch ist es möglich, auch umfangreiche reale Umgebungen sehr realistisch nachzubilden, was den Spielwert des Spielzeugs in Bezug auf Vorbereitung auf das Leben und Trainieren von Fähigkeiten enorm erhöht, denn es wird spielerisch das Herstellen einer Beziehung zwischen virtueller Spielumgebung und realer Umwelt erlernt. Somit bleibt der Bezug zur realen Umwelt durch das reale, bewegbare Spielzeug erhalten. Die Spielmöglichkeiten werden durch die erfindungsgemäße Kombination vervielfacht, wobei besonders die von spielenden Kindern besonders häufig geforderte Realitätsnähe hergestellt werden kann. Die Erfindung kann den Wunsch von spielenden Kindern, erlebte reale Situationen möglichst realitätsnah jedoch ohne die entsprechenden Gefahren nachzuspielen, in optimaler Weise erfüllen. Für das bewegbare Spielzeug ergeben sich drastisch erweiterte Spielmöglichkeiten mit gleichzeitigem Training von unterschiedlichen geistigen und körperlichen Fähigkeiten des spielenden Kindes. Das Kind kann sein reales Spielzeug in eine virtuelle Abenteuerwelt am Computer voll integrieren. Für das Mobiltelefon ergibt sich in besonders vorteilhafter Weise ein Zusatznutzen.

Zweckmäßigerweise ist das Ausgabegerät ein Grafikbildschirm, insbesondere ein Flach-, Flüssigkristall- oder TFT-Bildschirm.

Für einen netz- und ortsungebundenen Spielspaß ist das mobiltelefon, das Datenverarbeitungsgerät bzw. der Spielcomputer tragbar ausgebildet.

Zum realitätsnahen Nachspielen von erlebten oder realen Situation bildet das reale, bewegte Spielzeug etwas real Existierendes nach und simuliert die Simulation eine reale Umgebung und/oder reale Parameter des Nachgebildeten.

In einer bevorzugten Ausführungsform ist das Spielzeug eine Spielzeugrennbahn mit darauf bewegbaren Fahrspielzeugen, wobei die virtuelle Umgebung ein reales Reringeschehen nachbildet bzw. simuliert und die virtuellen Parameter reale Parameter von Rennwagen nachbilden bzw. simulieren.

Hierbei umfaßt die virtuelle Umgebung beispielsweise verschiedene Rennställe, verschiedene Rennstrecken, meteorologische Parameter, Rundenzähler, Sponsorensuche, Qualifikationsrennen für Rennlizenzen, Trainingsrennen, Abschlußrennen, Boxenteam, Reparaturen des Rennfahrzeugs und/oder Boxenstopp des Rennfahrzeugs.

Ferner umfassen die virtuellen Parameter beispielsweise Schäden am Rennfahrzeug, insbesondere Motordefekt, Abnutzung am Rennfahrzeug, insbesondere Reifenabnutzung und/oder Bremsbelagabnutzung, Verbrauch von Betriebsstoffen durch das Rennfahrzeug, insbesondere Benzinverbrauch, Ölverbrauch, und/oder Konfiguration des Rennfahrzeugs, insbesondere bzgl. Bremse, Motor, Getriebe, Kupplung, Differential, Federung, Stabilisatoren, Reifen und/oder Flügel.

Zur weiteren Erhöhung der Realitätsnähe sind Sensoren zur Aufnahme von Einwirkungen auf das Fahrspielzeug aus der Umgebung vorgesehen, insbesondere zur Aufnahme von gefahrener Strecke, Geschwindigkeit, Unfälle, wobei das Mobiltelefon, das Datenverarbeitungsgerät bzw. der Spielcomputer derart ausgebildet ist, daß dieses bzw. dieser entsprechende virtuelle Parameter in Abhängigkeit von Sensordaten automatisiert verändert.

In einer alternativen bevorzugten Ausführungsform ist das Spielzeug eine Tiernachbildung, insbesondere ein Hund, wobei die virtuelle Umgebung eine reale Umgebung des nachgebildeten Tieres simuliert und die virtuellen Parameter reale Bedürfnisse des nachgebildeten Tieres simulieren.

Hierbei umfassen die virtuellen Parameter beispielsweise Hunger, Durst, Fressen, Saufen. Bewegungsdrang, Lösen des Tieres, Spielbedürfnis, Gesundheit, Schlafbedürfnis.

Zweckmäßigerweise ist das Mobiltelefon, das Datenverarbeitungsgerät bzw. der Spielcomputer derart ausgebildet, daß dieses bzw. dieser in Abhängigkeit von momentan simulierten Bedürfnissen der Tiernachbildung entsprechende Reaktionen der Tiemachbildung automatisiert auslöst, insbesondere Jaulen, Kopf bewegen, Saufen, Fressen, Gehen, Laufen, Bellen, Fuß heben zum Lösen der Tiernachbildung, Schwanzwedeln, Winseln und/oder Schlafen.

Zur weiteren Erhöhung der Realitätsnähe sind Sensoren zur Aufnahme von Reizen aus der Umgebung der Tiernachbildung vorgesehen, insbesondere zur Aufnahme von Geräuschen, streicheln und/oder schlagen, wobei das Mobiltelefon, das Datenverarbeitungsgerät bzw. der Spielcomputer derart ausgebildet ist, daß dieses bzw. dieser in Abhängigkeit von Sensordaten entsprechende Reaktionen und/oder Veränderungen von simulierten Bedürfnissen der Tiernachbildung automatisiert auslöst.

Die Erfindung wird im folgenden anhand der Zeichnung näher erläutert. Diese zeigt in:
- Fig. 1: eine erste bevorzugte Ausführungsform einer erfindungsgemäßen Kombination aus Mobiltelefon und realem, bewegbaren Spielzeug,
- Fig. 2: eine zweite bevorzugte Ausführungsform einer erfindungsgemäßen Kombination aus Mobiltelefon und realem, bewegbaren Spielzeug,
- Fig. 3: eine dritte bevorzugte Ausführungsform einer erfindungsgemäßen Kombination aus Mobiltelefon und realem, bewegbaren Spielzeug,
- Fig. 4: eine vierte bevorzugte Ausführungsform einer erfindungsgemäßen Kombination aus Spielcomputer und realem, bewegbaren Spielzeug,
- Fig. 5: eine fünfte bevorzugte Ausführungsform einer erfindungsgemäßen Kombination aus Spielcomputer und realem, bewegbaren Spielzeug und
- Fig. 6: eine sechste bevorzugte Ausführungsform einer erfindungsgemäßen Kombination aus Spielcomputer und realem, bewegbaren Spielzeug.

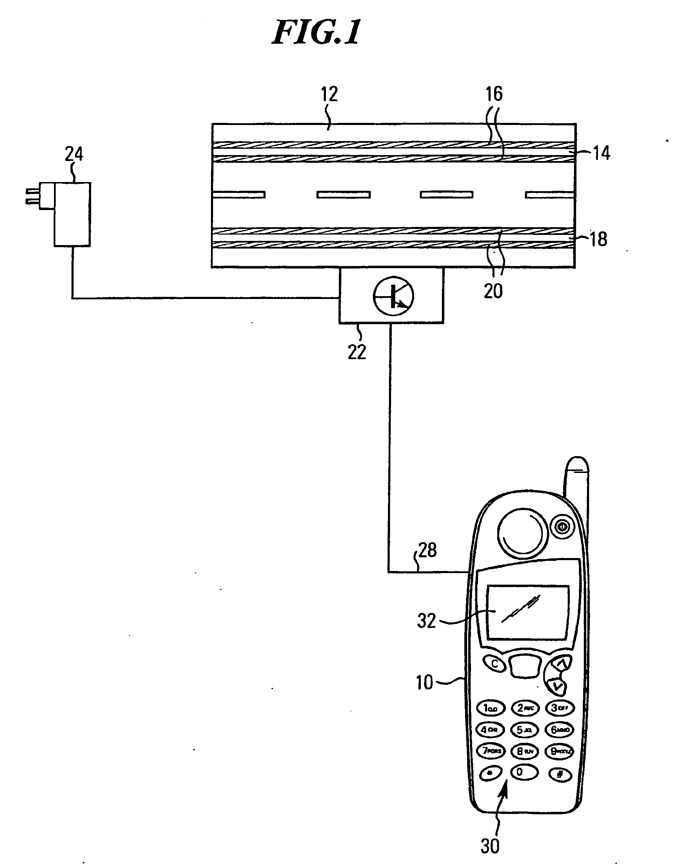

Fig. 1 veranschaulicht schematisch eine erste erfindungsgemäße Kombination aus Mobiltelefon 10 und realem, bewegbaren Spielzeug in Form einer Spielzeugrennbahn 12 mit darauf bewegbaren, nicht dargestellten Fahrspielzeugen. Die Spielzeugrennbahn 12 umfaßt eine erste Führungsspur 14 mit ersten elektrischen Kontakten 16 für ein erstes Fahrspielzeug, eine zweite Führungsspur 18 mit zweiten elektrischen Kontakten 20 für ein zweites Fahrspielzeug, eine Motorendstufe 22 und einen Transformator 24 zur Versorgung der Motorendstufe 22 mit elektrischer Energie. Die elektrischen Kontakte 16, 20 versorgen einen Antriebsmotor jeweiliger Fahrspielzeuge mit elektrischer Energie, wobei beispielsweise über eine variable Fahrspannung die Geschwindigkeit der jeweiligen Fahrspielzeuge variierbar ist.

Erfindungsgemäß ist als Steuerung für die Fahrspielzeuge auf der Spielzeugrennbahn 12 das Mobiltelefon 10 vorgesehen und in entsprechender Weise mit dem Motortreiber 22 verbunden. Dieses Mobiltelefon 10 umfaßt eine Schnittstelle, mittels derer eine Verbindung über ein Linkkabel 28 mit der Motorendstufe 22 herstellbar ist. Ein als Datenverarbeitungsprogramm ablaufendes Betriebssystem des Mobiltelefones 10 ist derart ausgebildet, daß es eine Steuerung eines Fahrspielzeugs durch Eingaben über eine Eingabeeinrichtung 30 des Mobiltelefones 10 erlaubt. Ferner erzeugt dieses Betriebssystem einen Spielablauf auf einer Anzeigeeinrichtung 32 des Mobiltelefones 10. Hierbei wird ggf. die Spielzeugrennbahn 12 in den virtuellen Spielablauf auf der Anzeigeeinrichtung 32 einbezogen.

Hierzu kann mittels des Betriebssystems ein virtuelles Autorennen auf dem das Mobiltelefon gefahren werden, wobei die Fahrsequenzen real auf der zweispurigen Spielzeugrennbahn 12 gefahren werden. Das Mobiltelefon 10 kann in Abhängigkeit vom virtuellen Spielverlauf das Fahrspielzeug in den Parametern Höchstgeschwindigkeit, Beschleunigungsverhalten und Bremsen beeinflussen. Im realen Rennverlauf dient das Mobiltelefon 10 als Handregler für jeweils ein Fahrspielzeug. Die Spielzeugrennbahn 12 stellt dem Mobiltelefon 10 entsprechende Rückmeldungen über den Rennverlauf zur Verfügung, wie beispielsweise Rundenkontaktsignale zur Berechnung der Rundenzeit und zur Ermittlung des Siegers. In der dargestellten Ausführungsform kann ein einzelner Spieler fahren und ggf. wird ein zweites Fahrspielzeug virtuell auf der Anzeigevorrichtung oder auch real auf der Spielzeugrennbahn vom Mobiltelefon 10 gesteuert. Hierbei spielt der Spieler dann gegen das Mobiltelefon 10.

Um ein Zusammenspiel von Mobiltelefon 10 und Spielzeugrennbahn 12 zu ermöglichen, werden folgende Module benötigt: Ein entsprechendes Spielprogramm im Betriebssystem des Mobiltelefones 10, eine Hardwareanbindung in Form des Linkkabels 28 sowie ein Elektronikanschlußteil in Form der Motorendstufe 22 der Spielzeugrennbahn 12. Wie bereits erwähnt, dient das Mobiltelefon 10 mit seiner Eingabeeinrichtung 30 als Steuerung bzw. Handregler für ein Fahrspielzeug auf der Spielzeugrennbahn 12. Hierzu kann ein Benutzer mit entsprechenden Tasten der Eingabeeinrichtung 30 das Fahrspielzeug beschleunigen, bremsen oder beispielsweise schlagartig beschleunigen (Boostfunktion). Um einen Boxenstopp nachzuspielen, wird beispielsweise mit einer bestimmten Taste der Eingabeeinrichtung 30 ein Boxenstopp initiiert.

Es ist jedoch auch möglich, daß zusätzlich oder alternativ eine separate manuelle Steuerung für die Fahrspielzeuge vorgesehen ist.

Durch das Spielprogramm des Betriebssystems des Mobiltelefones 10 kann nun eine reale Rennumgebung nachempfunden werden. Ferner können über das Mobiltelefon 10 mit dem Spielprogramm Parameter des Fahrspielzeugs beeinflußt werden. So ist z.B. eine Auswahl verschiedener real existierender Fahrspielzeuge möglich, wie beispielsweise Formel-1-Rennwagen, Tourenwagen, Rallye-Wagen, Oldtimer (verschiedene Marken und Typen), wobei dann durch entsprechenden Eingriff des das Mobiltelefones 10 ein reales Fahrverhalten des Fahrspielzeuges auf der Spielzeugrennbahn beeinflußt wird. So beschleunigt beispielsweise ein Oldtimer langsamer als ein Formel-1-Rennwagen. Desweiteren ist eine Auswahl eines entsprechenden Rennstalles möglich, wie sie beispielsweise bei realen Formel-1-Rennen existieren (Schuhmacher, Haekkinen usw.). Ebenfalls kann eine bestimmte Rennstrecke ausgewählt werden, wie beispielsweise Monza, Spa oder Monte Carlo. Die weiteren Eigenschaften des Fahrspielzeugs können weiter über eine Fahrzeugkonfiguration innerhalb des Spielprogrammes beeinflußt werden, dies betrifft beispielsweise u.a. Bremse, Motor, Getriebe, Kupplung, Differential, Federung, Stabilisatoren, Reifen, Flügel usw. Entsprechende Parameter des Fahrspielzeugs können realen Parametern von echten Rennwagen nachempfunden werden, so z.B. Motor an/aus, Kraftstoffverbrauch, Reifenabnutzung, Kraftstoffmenge im Tank, Motordefekt, dies ggf. jeweils über Zufallsgeneratoren. Hierdurch kann das Spielprogramm beispielsweise erzwingen, daß ein Spieler einen Boxenstopp durchführt, um beispielsweise abgenutzte Reifen auszutauschen oder nachzutanken, so daß sich das Fahrspielzeug nach dem Boxenstopp unter dem Einfluß des Mobiltelefones 10 wieder besser über die Spielzeugrennbahn 12 bewegt. Auch meteorologische Umgebungsbedingungen, wie Sonne, Regen oder ähnliches können vorgegeben oder per Zufall in den Rennbetrieb eingeführt werden. Zweckmäßigerweise sind unterschiedliche Schwierigkeitsgrade (Anfänger/Profi) vorgesehen. Es können auch unterschiedliche Arten von Rennen gefahren werden, wie beispielsweise eine bestimmte Anzahl von Runden oder ein Zeitrennen. Ggf. ist eine Tempoanzeige vorgesehen. Zweckmäßigerweise läßt sich ein Fahrzeugsound (passend zum Fahrzeug) und/oder Umgebungsgeräusche (Publikum , Begleitmusik etc.) von dem Mobiltelefon 10 erzeugen. Vor dem eigentlichen Rennen können, wie in der Realität auch, diverse organisatorische Dinge oder Abläufe durchgeführt werden, wie beispielsweise die Suche nach Sponsoren, die Qualifikation für eine Rennlizenz, die Zusammenstellung des Boxenteams, die Suche nach dem Rennstall, ein freies Training zur Fahrzeugoptimierung usw. Beim Start des eigentlichen Rennens wird der Originalverlauf mit Startampel, Startsound und Frühstart durch das Mobiltelefon 10 nachempfunden. Je nach Art des Rennens wird mittels des Mobiltelefones 10 ein Training, ein Qualifikationsrennen oder ein Zweikampf durchgeführt. Das Rennen wird auf der Spielzeugrennbahn 12 in Realität gefahren, wobei sich die zuvor genannten Einstellungen des Spielprogrammes direkt auf das bzw. die Fahrzeuge auf der Spielzeugrennbahn 12 auswirken. Das Mobiltelefon 10 zeigt während des Rennens beispielsweise folgende Informationen: Ausgewähltes Fahrzeug, momentane Runde, Plazierung im Rennen, Tacho, beste Rundenzeit, aktuelle Rundenzeit, Anzeige Resttreibstoff, Reifenverschleiß, Schadenanzeige und/oder Boxenlampe.

Wenn Kraftstoffverbrauch, Reifenabnutzung oder Fahrzeugschäden einen Boxenstopp nötig machen, wird über eine bestimmte Taste der Eingabeeinrichtung 30 ein Boxenstopp in der nächsten Runde angekündigt. Überfährt das Fahrspielzeug in der nächsten Runde den Rundenkontakt, dann wird es abgebremst und bleibt in der "Boxengasse" stehen. Ein Fahrerlagerbildschirm wird aufgerufen und alle Aktionen in der Box sind für den Spieler ersichtlich. Nach erfolgtem Boxenstopp wird die Fahrspannung für dieses Fahrspielzeug wieder freigegeben und das Rennen geht für dieses Fahrspielzeug weiter. Am Ende des Rennens wird der Sieger ermittelt, Rennzeiten sowie Rundenzeiten dargestellt und eine Siegerehrung durchgeführt. Nach dem Rennen kann, wie in der Realität auch, eine Analyse des Rennens durch Renningenieure vorgesehen sein, die auf der Basis der Renndaten versuchen, das Fahrzeug zu optimieren. Mit Preisgeldern können bessere Tuningteile gekauft werden, der Fahrer kann entweder weitere Testrennen durchführen oder Urlaub machen usw. Der Annäherung an die Realität eines echten beispielsweise Formel-1-Renngeschehens sind hierbei keine Grenzen gesetzt.

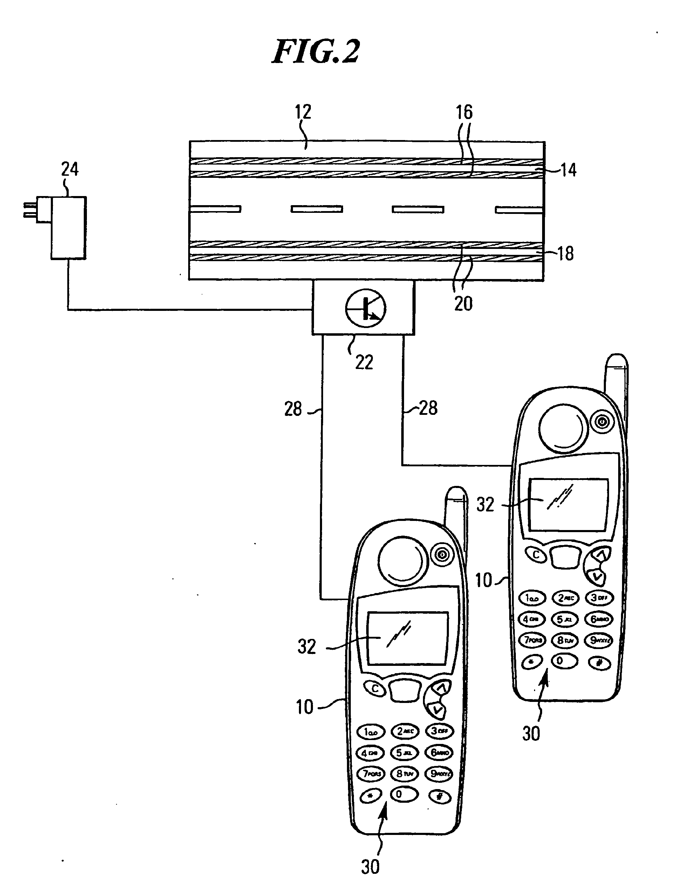

Zur Steuerung der Fahrspielzeuge auf der Spielzeugrennbahn 12 berechnet das Mobiltelefon 10 aus manuellen Eingaben über die Eingabeeinrichtung 30 durch einen Spieler entsprechende Parameter für das virtuelle Spielgeschehen wie auch für die Steuerung der Fahrspielzeuge auf der Spielzeugrennbahn 12. Entsprechende Signale werden über die Linkstrecke (Linkkabel 28) des das Mobiltelefones 10 seriell an die Motorendstufe 22 an einem Bahnanschlußstück übertragen und steuern eine entsprechende Endstufe der Fahrzeugmotoren. In Gegenrichtung werden vom Bahnanschlußstück die Rundenkontaktsignale zum Mobiltelefon 10 übertragen. Jedes Anschlußstück der Spielzeugrennbahn 12 beinhaltet zwei Endstufen und zwei Rundenkontakte, was den Anschluß eines zweiten Mobiltelefones 10 ermöglicht, welches dann das Fahrzeug auf der zweiten Spur steuert. Diese dritte alternative Ausführungsform ist in Fig. 2 dargestellt.

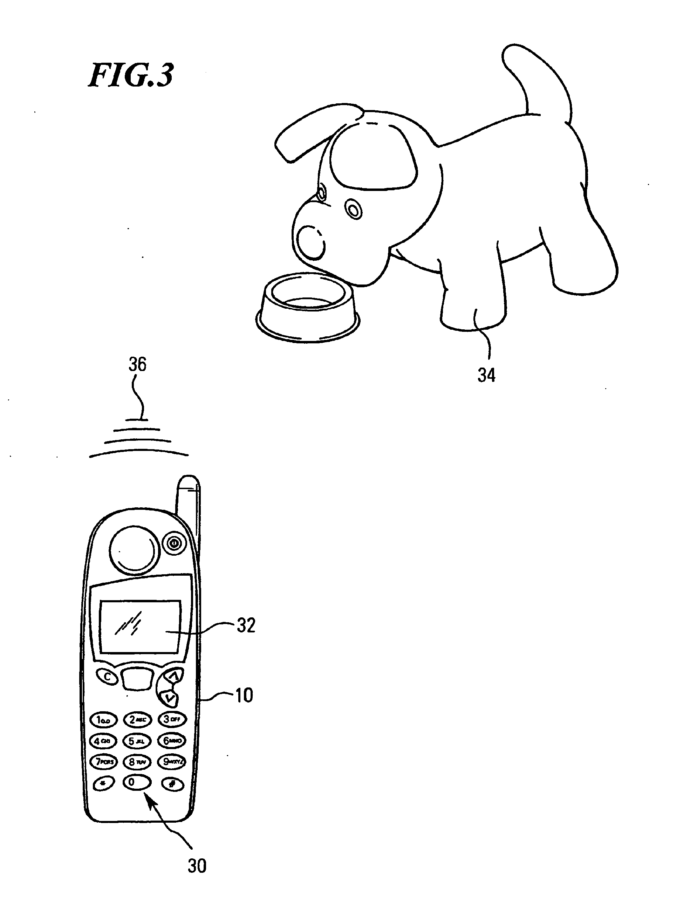

Fig. 3 veranschaulicht eine weitere bevorzugte alternative Ausführungsform einer erfindungsgemäßen Kombination eines mittels einer Steuereinrichtung bewegbaren Spielzeuges mit einem das Mobiltelefon 10. In Fig. 3 ist das reale, bewegbare Spielzeug eine Tiernachbildung in Form eines Hundes 34. Dieser Hund 34 ist über eine Fernsteuerverbindung 36 fernsteuerbar. In diesem Fall läuft mittels des Spielprogrammes des Betriebssystems des Mobiltelefones 10 nicht, wie im vorherigen Beispiel, ein Renngeschehen ab, sondern es wird eine reale Umgebung des Hundes 34 virtuell simuliert, wie auch entsprechende Bedürfnisse des Hundes simuliert werden, beispielsweise analog zu dem bekannten "Tamagochi"-Spiel.

Hierbei äußert der Hund spezielle Bedürfnisse, die von einem Benutzer befriedigt werden müssen. Je nachdem, wie gut oder schlecht dies der Benutzer tut, reagiert der Hund positiv oder negativ. Über die bidirektionale Funkstrecke 36 ist das Mobiltelefon 10 mit dem Hund 34 verbunden. Der Hund 34 reagiert interaktiv auf Spielaktionen bzw. Aktionen im Mobiltelefon 10. Das Mobiltelefon 10 kann in Abhängigkeit des virtuellen Spielverlaufs den Hund 34 in den Parametern gehen/laufen, trinken/Pipi machen, bellen/winseln, Kopf verdrehen/Schwanz wedeln steuern. Der Hund 34 kann auf Bewegungen im Raum, auf Klatschgeräusche, auf Berührung/Streicheln und auf Futtermangel reagieren. Diese Daten werden dem Mobiltelefon 10 mittels der Funkstrecke 36 übermittelt und somit aktiv in den Spielablauf des Spielprogramms eingeführt. Ggf. ist in dem Hund 34 eine Kamera vorgesehen und auf der Anzeigeeinrichtung 32 wird eine entsprechende Darstellung aus Sicht des Hundes dargestellt.

Das virtuelle Spiel gemäß dem Spielprogramm umfaßt beispielsweise folgende Funktionen: hat Hunger; wird gefüttert; möchte Gassi gehen; muß Pipi machen; möchte spielen; ist krank; schläft. Hierauf reagiert der Hund 34 dann programmgesteuert entsprechend jeweils folgendermaßen: jault, bewegt Kopf; trinkt aus Napf; geht/läuft, bewegt Kopf, bellt; hebt Fuß und los geht's; wird gedrückt, gestreichelt, wedelt mit Schwanz; jault/winselt; ist inaktiv (kann durch diverse Sensoren aufwachen). Das virtuelle Spielgeschehen wird durch entsprechende Rückmeldung von dem Hund 34 beispielsweise folgendermaßen gesteuert: Hat der Hund getrunken (Sensor), ist er im virtuellen Spielgeschehen satt. Ist der Hund fertig mit Pipi machen, möchte er im virtuellen Spielgeschehen wieder nach Hause gehen. Wurde mit dem Hund gespielt (Druckschalter), ist er im virtuellen Spielgeschehen zufrieden. Ist eine Wachhundfunktion eingeschaltet (Bewegungsmelder), meldet der Hund Besucher beispielsweise durch Bellen. Durch entsprechendes Klatschgeräusch (Mikrofon im Hund 34) wacht dieser im virtuellen Spielgeschehen auf und bellt, wobei der reale Hund dann entsprechend angesteuert wird. Bei aktiver Kamera erscheint ein Bild auf dem Display 32.

Zur Realisation dieser Spielanordnung ist beispielsweise eine bidirektionale Funkeinheit (Sender-Empfänger) integriert. Hierzu ist beispielsweise eine Übertragung im 434 MHz oder im 868 MHz ISM-Band vorgesehen, unter Verwendung hoch integrierter Bausteine in IC-Form. Auch eine Verbindung mit Bluetooth (ISM-Band 2,45 GHz) ist möglich. Alternativ ist die Funkeinheit vom Mobiltelefon 10 abgesetzt vorgesehen, wobei das Mobiltelefon 10 in eine Art Schale eingelegt wird, die eine Verbindung zu einem seriellen Port des Mobiltelefones 10 herstellt und die Funkeinheit beinhaltet. Die Daten von und zur Funkeinheit werden dann über den seriellen Port zum Mobiltelefon 10 übertragen. Ebenso wird die Funkeinheit über den Port mit Strom aus dem Mobiltelefon 10 versorgt. Diese Schale könnte der Anwendung entsprechend z.B. als Umhängetasche oder integriert in eine Hundehütte ausgeführt sein. In den Hund 34 ist folgendes integriert: Funksende- und Empfangseinheit (passend zur Fernsteuereinheit im Mobiltelefon 10), Mikrokontroller zum Auswerten und Aufbereiten der Funksignale - Erfassung von Sensoren und Schaltern - Schalten von Motoren und Geräuscherzeugern, passiv infrarot Bewegungsmelder, Mikrofon zur Geräuscherfassung, zusätzliche Motoren (z.B. Schwanz wedeln), Taster - Schaltkontakte (drücken, streicheln), Wasserstandsmelder, Vorratsbehälter und/ oder Kamera.

Die Erfindung wurde voranstehend lediglich beispielhaft mit einem Mobiltelefon erläutert. Dieses Mobiltelefon kann auch eine Datenverarbeitungsanlage, ein Spielcomputer oder ein Game-Boy mit Programm-Cartridge sein, wie nachfolgend beispielhaft beschrieben.

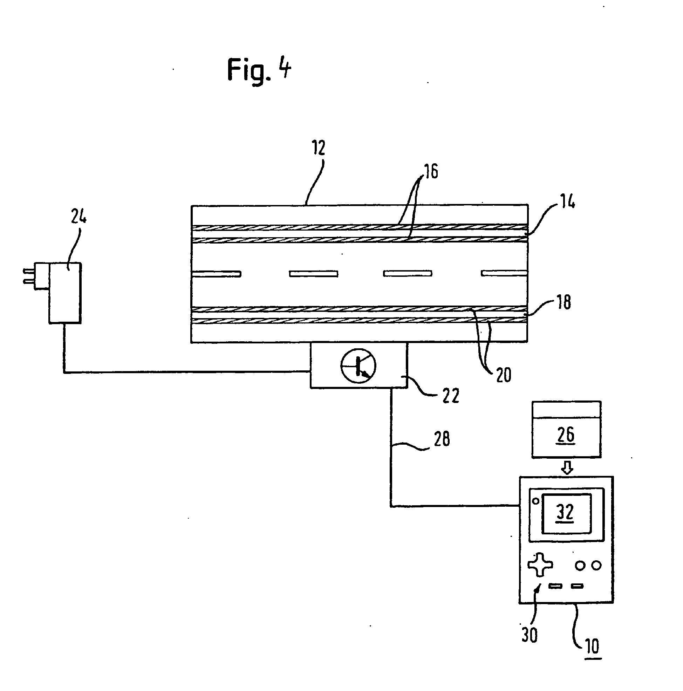

Fig. 4 veranschaulicht schematisch eine vierte erfindungsgemäße Kombination aus Spielcomputer 10 und realem, bewegbaren Spielzeug in Form einer Spielzeugrennbahn 12 mit darauf bewegbaren, nicht dargestellten Fahrspielzeugen. Die Spielzeugrennbahn 12 umfaßt eine erste Führungsspur 14 mit ersten elektrischen Kontakten 16 für ein erstes Fahrspielzeug, eine zweite Führungsspur 18 mit zweiten elektrischen Kontakten 20 für ein zweites Fahrspielzeug, eine Motorendstufe 22 und einen Transformator 24 zur Versorgung der Motorendstufe 22 mit elektrischer Energie. Die elektrischen Kontakte 16, 20 versorgen einen Antriebsmotor jeweiliger Fahrspielzeuge mit elektrischer Energie, wobei beispielsweise über eine variable Fahrspannung die Geschwindigkeit der jeweiligen Fahrspielzeuge variierbar ist.

Erfindungsgemäß ist als Steuerung für die Fahrspielzeuge auf der Spielzeugrennbahn 12 der Spielcomputer 10 vorgesehen und in entsprechender Weise mit dem Motortreiber 22 verbunden. Dieser Spielcomputer 10 ist in der dargestellten Ausführungsform als sogen. Gameboy ausgebildet, welcher zur Aufnahme einer Programm-Cartridge 26 ausgebildet ist, die ein entsprechendes Spielprogramm enthält. Ferner ist eine Schnittstelle vorgesehen, mittels derer eine Verbindung über ein Linkkabel 28 mit der Motorendstufe 22 herstellbar ist. Das Spielprogramm auf der Programm-Cartridge 26 ist derart ausgebildet, daß es eine Steuerung eines Fahrspielzeugs durch Eingaben über eine Eingabeeinrichtung 30 des Spielcomputers 10 erlaubt. Ferner erzeugt dieses Spielprogramm einen Spielablauf auf einer Anzeigeeinrichtung 32 des Spielcomputers 10. Hierbei wird die Spielzeugrennbahn 12 in den virtuellen Spielablauf auf der Anzeigeeinrichtung 32 einbezogen.

Hierzu kann mittels des Spielprogramms auf der Programm-Cartridge 26 ein virtuelles Autorennen auf dem Spielcomputer gefahren werden, wobei die Fahrsequenzen real auf der zweispurigen Spielzeugrennbahn 12 gefahren werden. Der Spielcomputer kann in Abhängigkeit vom virtuellen Spielverlauf das Fahrspielzeug in den Parametern Höchstgeschwindigkeit, Beschleunigungsverhalten und Bremsen beeinflussen. Im realen Rennverlauf dient der Spielcomputer als Handregler für jeweils ein Fahrspielzeug. Die Spielzeugrennbahn 12 stellt dem Spielcomputer entsprechende Rückmeldungen über den Rennverlauf zur Verfügung, wie beispielsweise Rundenkontaktsignale zur Berechnung der Rundenzeit und zur Ermittlung des Siegers. In der dargestellten Ausführungsform kann ein einzelner Spieler fahren und ggf. wird ein zweites Fahrspielzeug virtuell auf der Anzeigevorrichtung oder auch real auf der Spielzeugrennbahn vom Spielcomputer gesteuert. Hierbei spielt der Spieler dann gegen den Spielcomputer.

Um ein Zusammenspiel von Spielcomputer 10 und Spielzeugrennbahn 12 zu ermöglichen, werden folgende Module benötigt: Ein entsprechendes Spielprogramm auf der Programm-Cartridge 26, eine Hardwareanbindung in Form des Linkkabels 28 sowie ein Elektronikanschlußteil in Form der Motorendstufe 22 der Spielzeugrennbahn 12. Wie bereits erwähnt, dient der Spielcomputer 10 mit seiner Eingabeeinrichtung 30 als Steuerung bzw. Handregler für ein Fahrspielzeug auf der Spielzeugrennbahn 12. Hierzu kann ein Benutzer mit entsprechenden Tasten der Eingabeeinrichtung 30 das Fahrspielzeug beschleunigen, bremsen oder beispielsweise schlagartig beschleunigen (Boostfunktion). Um einen Boxenstopp nachzuspielen, wird beispielsweise mit einer bestimmten Taste der Eingabeeinrichtung 30 ein Boxenstopp initiiert.

Es ist jedoch auch möglich, daß zusätzlich oder alternativ eine separate manuelle Steuerung für die Fahrspielzeuge vorgesehen ist.

Durch das Spielprogramm auf der Programm-Cartridge 26 kann nun eine reale Rennumgebung nachempfunden werden. Ferner können über den Spielcomputer 10 mit dem Spielprogramm Parameter des Fahrspielzeugs beeinflußt werden. So ist z.B. eine Auswahl verschiedener real existierender Fahrspielzeuge möglich, wie beispielsweise Formel-1-Rennwagen, Tourenwagen, Rallye-Wagen, Oldtimer (verschiedene Marken und Typen), wobei dann durch entsprechenden Eingriff des Spielcomputers ein reales Fahrverhalten des Fahrspielzeuges auf der Spielzeugrennbahn beeinflußt wird. So beschleunigt beispielsweise ein Oldtimer langsamer als ein Formel-1-Rennwagen. Desweiteren ist eine Auswahl eines entsprechenden Rennstalles möglich, wie sie beispielsweise bei realen Formel-1-Rennen existieren (Schuhmacher, Haekkinen usw.). Ebenfalls kann eine bestimmte Rennstrecke ausgewählt werden, wie beispielsweise Monza, Spa oder Monte Carlo. Die weiteren Eigenschaften des Fahrspielzeugs können weiter über eine Fahrzeugkonfiguration innerhalb des Spielprogrammes beeinflußt werden, dies betrifft beispielsweise u.a. Bremse, Motor, Getriebe, Kupplung, Differential, Federung, Stabilisatoren, Reifen, Flügel usw. Entsprechende Parameter des Fahrspielzeugs können realen Parametern von echten Rennwagen nachempfunden werden, so z.B. Motor an/aus, Kraftstoffverbrauch, Reifenabnutzung, Kraftstoffmenge im Tank, Motordefekt, dies ggf. jeweils über Zufallsgeneratoren. Hierdurch kann das Spielprogramm beispielsweise erzwingen, daß ein Spieler einen Boxenstop durchführt, um beispielsweise abgenutzte Reifen auszutauschen oder nachzutanken, so daß sich das Fahrspielzeug nach dem Boxenstopp unter dem Einfluß des Spielcomputers 10 wieder besser über die Spielzeugrennbahn 12 bewegt. Auch meteorologische Umgebungsbedingungen, wie Sonne, Regen oder ähnliches können vorgegeben oder per Zufall in den Rennbetrieb eingeführt werden. Zweckmäßigerweise sind unterschiedliche Schwierigkeitsgrade (Anfänger/Profi) vorgesehen. Es können auch unterschiedliche Arten von Rennen gefahren werden, wie beispielsweise eine bestimmte Anzahl von Runden oder ein Zeitrennen. Ggf. ist eine Tempoanzeige vorgesehen. Zweckmäßigerweise läßt sich ein Fahrzeugsound (passend zum Fahrzeug) und/oder Umgebungsgeräusche (Publikum , Begieltmusik etc.) von dem Spielcomputer 10 erzeugen. Vor dem eigentlichen Rennen können, wie in der Realität auch, diverse organisatorische Dinge oder Abläufe durchgeführt werden, wie beispielsweise die Suche nach Sponsoren, die Qualifikation für eine Rennlizenz, die Zusammenstellung des Boxenteams, die Suche nach dem Rennstall, ein freies Training zur Fahrzeugoptimierung usw. Beim Start des eigentlichen Rennens wird der Originalverlauf mit Startampel, Startsound und Frühstart durch den Spielcomputer 10 nachempfunden. Je nach Art des Rennens wird mittels des Spielcomputers 10 ein Training, ein Qualifikationsrennen oder ein Zweikampf durchgeführt. Das Rennen wird auf der Spielzeugrennbahn 12 in Realität gefahren, wobei sich die zuvor genannten Einstellungen des Spielprogrammes auf der Programm-Cartridge 26 direkt auf das bzw. die Fahrzeuge auf der Spielzeugrennbahn 12 auswirken. Der Spielcomputer 10 zeigt während des Rennens beispielsweise folgende Informationen: Ausgewähltes Fahrzeug, momentane Runde, Plazierung im Rennen, Tacho, beste Rundenzeit, aktuelle Rundenzeit, Anzeige Resttreibstoff, Reifenverschleiß, Schadenanzeige und/oder Boxenlampe.

Wenn Kraftstoffverbrauch, Reifenabnutzung oder Fahrzeugschäden einen Boxenstopp nötig machen, wird über eine bestimmte Taste der Eingabeeinrichtung 30 ein Boxenstopp in der nächsten Runde angekündigt. Überfährt das Fahrspielzeug in der nächsten Runde den Rundenkontakt, dann wird es abgebremst und bleibt in der "Boxengasse" stehen. Ein Fahrerlagerbildschirm wird aufgerufen und alle Aktionen in der Box sind für den Spieler ersichtlich. Nach erfolgtem Boxenstopp wird die Fahrspannung für dieses Fahrspielzeug wieder freigegeben und das Rennen geht für dieses Fahrspielzeug weiter. Am Ende des Rennens wird der Sieger ermittelt, Rennzeiten sowie Rundenzeiten dargestellt und eine Siegerehrung durchgeführt. Nach dem Rennen kann, wie in der Realität auch, eine Analyse des Rennens durch Renningenieure vorgesehen sein, die auf der Basis der Renndaten versuchen, das Fahrzeug zu optimieren. Mit Preisgeldern können bessere Tuningteile gekauft werden, der Fahrer kann entweder weitere Testrennen durchführen oder Urlaub machen usw. Der Annäherung an die Realität eines echten beispielsweise Formel-1-Renngeschehens sind hierbei keine Grenzen gesetzt.

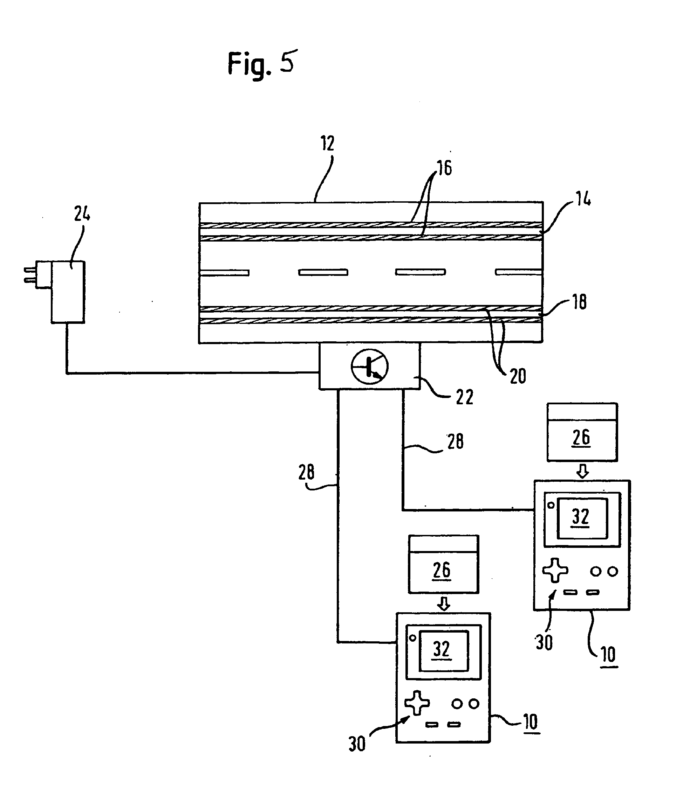

Zur Steuerung der Fahrspielzeuge auf der Spielzeugrennbahn 12 berechnet der Spielcomputer 10 aus manuellen Eingaben über die Eingabeeinrichtung 30 durch einen Spieler entsprechende Parameter für das virtuelle Spielgeschehen wie auch für die Steuerung der Fahrspielzeuge auf der Spielzeugrennbahn 12. Entsprechende Signale werden über die Linkstrecke (Linkkabel 28) des Spielcomputers 10 seriell an die Motorendstufe 22 an einem Bahnanschlußstück übertragen und steuern eine entsprechende Endstufe der Fahrzeugmotoren. In Gegenrichtung werden vom Bahnanschlußstück die Rundenkontaktsignale zum Spielcomputer 12 übertragen. Jedes Anschlußstück der Spielzeugrennbahn 12 beinhaltet zwei Endstufen und zwei Rundenkontakte, was den Anschluß eines zweiten Spielcomputers 10 ermöglicht, welcher dann das Fahrzeug auf der zweiten Spur steuert. Diese fünfte alternative Ausführungsform ist in Fig. 5 dargestellt.

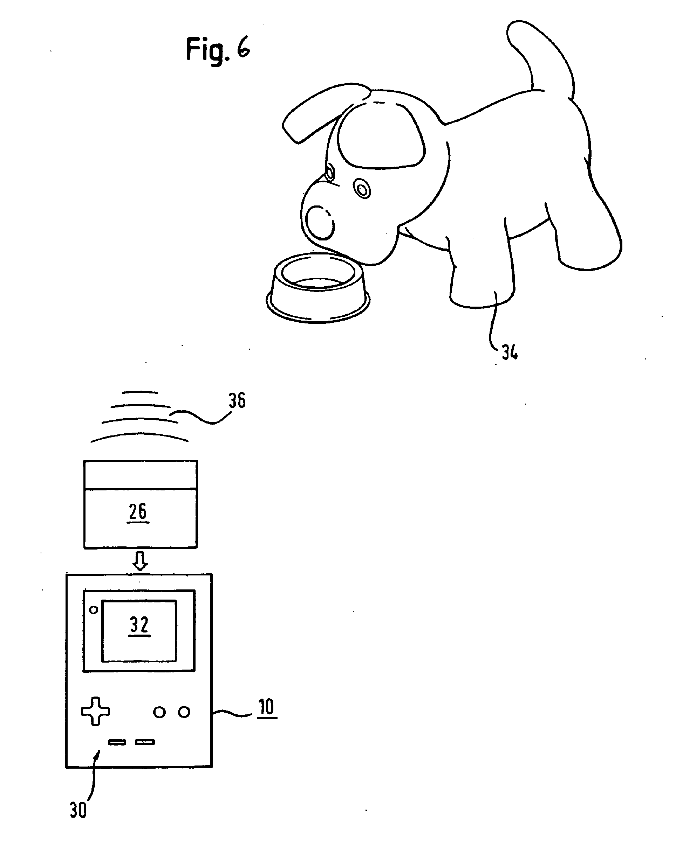

Fig. 6 veranschaulicht eine sechste bevorzugte Ausführungsform einer erfindungsgemäßen Kombination eines mittels einer Steuereinrichtung bewegbaren Spielzeuges mit einem Spielcomputer. In Fig. 6 ist der Spielcomputer 10 wiederum als sog. Gameboy mit Programm-Cartridge 26 ausgebildet. Das reale, bewegbare Spielzeug ist in diesem Fall eine Tiernachbildung in Form eines Hundes 34. Dieser Hund 34 ist über eine Fernsteuerverbindung 36 fernsteuerbar. In diesem Fall läuft mittels des Spielprogrammes auf der Programm-Cartridge 26 nicht, wie im vorherigen Beispiel, ein Renngeschehen ab, sondern es wird eine reale Umgebung des Hundes 34 virtuell simuliert, wie auch entsprechende Bedürfnisse des Hundes simuliert werden, beispielsweise analog zu dem bekannten "Tamagochi"-Spiel. Hierbei äußert der Hund spezielle Bedürfnisse, die von einem Benutzer befriedigt werden müssen. Je nachdem, wie gut oder schlecht dies der Benutzer tut, reagiert der Hund positiv oder negativ. Über die bidirektionale Funkstrecke 36 ist der Spielcomputer 10 mit dem Hund 34 verbunden. Der Hund 34 reagiert interaktiv auf Spielaktionen bzw. Aktionen im Spielcomputer 10. Der Spielcomputer 10 kann in Abhängigkeit des virtuellen Spielverlaufs den Hund 34 in den Parametern gehen/laufen, trinken/Pipi machen, bellen/winseln, Kopf verdrehen/Schwanz wedeln steuern. Der Hund 34 kann auf Bewegungen im Raum, auf Klatschgeräusche, auf Berührung/Streicheln und auf Futtermangel reagieren. Diese Daten werden dem Spielcomputer 10 mittels der Funkstrecke 36 übermittelt und somit aktiv in den Spielablauf des Spielprogramms auf der Programm-Cartridge 26 eingeführt. Ggf. ist in dem Hund 34 eine Kamera vorgesehen und auf der Anzeigeeinrichtung 32 wird eine entsprechende Darstellung aus Sicht des Hundes dargestellt.

Das virtuelle Spiel gemäß dem Spielprogramm auf der Programm-Cartridge 26 umfaßt beispielsweise folgende Funktionen: hat Hunger; wird gefüttert; möchte Gassi gehen; muß Pipi machen, möchte spielen; ist krank; schläft. Hierauf reagiert der Hund 34 dann programmgesteuert entsprechend jeweils folgendermaßen: jault, bewegt Kopf; trinkt aus Napf; geht/läuft, bewegt Kopf, bellt; hebt Fuß und los geht's; wird gedrückt, gestreichelt, wedelt mit Schwanz; jault/winselt; ist inaktiv (kann durch diverse Sensoren aufwachen). Das virtuelle Spielgeschehen wird durch entsprechende Rückmeldung von dem Hund 34 beispielsweise folgendermaßen gesteuert: Hat der Hund getrunken (Sensor), ist er im virtuellen Spielgeschehen satt. Ist der Hund fertig mit Pipi machen, möchte er im virtuellen Spielgeschehen wieder nach Hause gehen. Wurde mit dem Hund gespielt (Druckschalter), ist er im virtuellen Spielgeschehen zufrieden. Ist eine Wachhundfunktion eingeschaltet (Bewegungsmelder), meldet der Hund Besucher beispielsweise durch Bellen. Durch entsprechendes Klatschgeräusch (Mikrofon im Hund 34) wacht dieser im virtuellen Spielgeschehen auf und bellt, wobei der reale Hund dann entsprechend angesteuert wird. Bei aktiver Kamera erscheint ein Bild auf dem Display 32.

Zur Realisation dieser Spielanordnung ist beispielsweise in der Programm-Cartridge 26 eine bidirektionale Funkeinheit (Sender-Empfänger) integriert. Hierzu ist beispielsweise eine Übertragung im 434 MHz oder im 868 MHz ISM-Band vorgesehen, unter Verwendung hoch integrierter Bausteine in IC-Form. Auch eine Verbindung mit Bluetooth (ISM-Band 2,45 GHz) ist möglich. Alternativ ist die Funkeinheit von der Programm-Cartridge 26 abgesetzt vorgesehen, wobei der Spielcomputer 10 in eine Art Schale eingelegt wird, die eine Verbindung zu einem seriellen Port des Spielcomputers 10 herstellt und die Funkeinheit beinhaltet. Die Daten von und zur Funkeinheit werden dann über den seriellen Port zum Spielcomputer 10 übertragen. Ebenso wird die Funkeinheit über den Port mit Strom aus dem Spielcomputer 10 versorgt. Diese Schale könnte der Anwendung entsprechend z.B. als Umhängetasche oder integriert in eine Hundehütte ausgeführt sein. In den Hund 34 ist folgendes integriert: Funksende- und Empfangseinheit (passend zur Fernsteuereinheit im Spielcomputer 10), Mikrokontroller zum Auswerten und Aufbereiten der Funksignale - Erfassung von Sensoren und Schaltern - Schalten von Motoren und Geräuscherzeugern, passiv infrarot Bewegungsmelder, Mikrofon zur Geräuscherfassung, zusätzliche Motoren (z.B. Schwanz wedeln), Taster - Schaltkontakte (drücken, streicheln), Wasserstandsmelder, Vorratsbehälter und/ oder Kamera.

## Patentansprüche

1. Datenverarbeitungsanlage zum Ausführen eines Datenverarbeitungsprogramms mit einer Eingabevorrichtung (30) für Benutzereingaben und einer Ausgabevorrichtung (32) zur Ausgabe von Daten an den Benutzer, wobei die Datenverarbeitungsanlage eine Einrichtung (28; 34) zum Verbinden mit einem realen Spielzeug (12; 34) aufweist, wobei das reale Spielzeug (12; 34) über eine Steuereinrichtung bewegbar ist und die Datenverarbeitungsanlage mit dem Datenverarbeitungsprogramm als eine manuelle, über Benutzereingaben an der Eingabevorrichtung (30) steuerbare Steuereinrichtung des bewegten Spielzeuges (12; 34) ausgebildet ist,
**dadurch gekennzeichnet,**
**dass** die Datenverarbeitungsanlage sowie das Datenverarbeitungsprogramm derart ausgebildet sind, dass auf der Ausgabevorrichtung (32) eine Simulation einer virtuellen Umgebung und/oder virtueller Parameter des bewegten Spielzeuges (12; 34) kombiniert mit einem Spielablauf zum Durchspielen durch den Benutzer zur Verfügung gestellt ist, wobei der Spielablauf in Abhängigkeit von Benutzereingaben und von Rückmeldungen seitens des bewegbaren Spielzeugs (12; 34) über die Eingabevorrichtung (30) erfolgt und reale Bewegungen des bewegbaren Spielzeuges (12; 34) einbezieht.

2. Datenverarbeitungsanlage nach Anspruch 1, **dadurch gekennzeichnet, daß** das Ausgabegerät (32) ein Grafikbildschirm, insbesondere ein Flach-, Flüssigkristall- oder TFT-Bildschirm ist.

3. Datenverarbeitungsanlage nach Anspruch 1, **dadurch gekennzeichnet, daß** diese tragbar ausgebildet ist.

4. Datenverarbeitungsanlage nach wenigstens einem der vorhergehenden Ansprüche, **dadurch gekennzeichnet, daß** das reale, bewegte Spielzeug (12; 34) etwas real Existierendes nachbildet und die Simulation eine reale Umgebung und/oder reale Parameter des Nachgebildeten simuliert.

5. Datenverarbeitungsanlage nach wenigstens einem der vorhergehenden Ansprüche, **dadurch gekennzeichnet, daß** Spielzeug eine Spielzeugrennbahn (12) mit darauf bewegbaren Fahrspielzeugen ist, wobei die virtuelle Umgebung ein reales Renngeschehen nachbildet und die virtuellen Parameter reale Parameter von Rennwagen nachbilden.

6. Datenverarbeitungsanlage nach Anspruch 5, **dadurch gekennzeichnet, daß** die virtuelle Umgebung verschiedene Rennställe, verschiedene Rennstrekken, meteorologische Parameter, Rundenzähler, Sponsorensuche, Quatifikationsrennen für Rennlizenzen, Trainingsrennen, Abschlußrennen, Boxenteam, Reparaturen des Rennfahrzeugs und/oder Boxenstopp des Rennfahrzeugs umfaßt.

7. Datenverarbeitungsanlage nach Anspruch 5 oder 6, **dadurch gekennzeichnet, daß** die virtuellen Parameter Schäden am Rennfahrzeug, insbesondere Motordefekt, Abnutzung am Rennfahrzeug, insbesondere Reifenabnutzung und/oder Bremsbelagabnutzung, Verbrauch von Betriebsstoffen durch das Rännfahrzeug, insbesondere Benzinverbrauch, Ölverbrauch, und/oder Konfiguration des Rennfahrzeugs, insbesondere bzgl. Bremse, Motor, Getriebe, Kupplung Differential, Federung, Stabilisatoren, Reifen und/oder Flügel, umfassen.

8. Datenverarbeitungsanlage nach wenigstens einem der Ansprüche 5 bis 7, **dadurch gekennzeichnet, daß** Sensoren zur Aufnahme von Einwirkungen auf das Fahrspielzeug aus der Umgebung vorgesehen sind, insbesondere zur Aufnahme von gefahrener Strecke, Geschwindigkeit, Unfälle, wobei das Mobiltelefon (10), die Datenverarbeitungsanlage oder der Spielcomputer derart ausgebildet ist, daß dieses bzw. diese bzw. dieser entsprechende virtuelle Parameter in Abhängigkeit von Sensordaten automatisiert verändert.

9. Datenverarbeitungsanlage nach wenigstens einem der Ansprüche 1 bis 4,
**dadurch gekennzeichnet, daß** das Spielzeug eine Tiernachbildung (34), insbesondere ein Hund, ist, wobei die virtuelle Umgebung eine reale Umgebung des nachgebildeten Tieres (34) simuliert und die virtuellen Parameter reale Bedürfnisse des nachgebildeten Tieres (34) simulieren.

10. Datenverarbeitungsanlage nach Anspruch 9, **dadurch gekennzeichnet, daß** die virtuellen Parameter folgendes umfassen, Hunger, Durst, Fressen, Saufen, Bewegungsdrang, Lösen des Tieres, Spielbedürfnis, Gesundheit, Schlafbedürfnis.

11. Datenverarbeitungsanlage nach Anspruch 9 oder 10, **dadurch gekennzeichnet, daß** die Datenverarbeitungsanlage derart ausgebildet ist, daß diese in Abhängigkeit von momentan simulierten Bedürfnissen der Tiernachbildung (34) entsprechende Reaktionen der Tiernachbildung (34) automatisiert auslöst, insbesondere Jaulen, Kopf bewegen, Saufen, Fressen, Gehen, Laufen, Bellen, Fuß heben zum Lösen der Tiernachbildung, Schwanzwedeln, Winseln und/oder Schlafen.

12. Datenverarbeitungsanlage nach wenigstens einem der Ansprüche 9 bis 11,
**dadurch gekennzeichnet, daß** Sensoren zur Aufnahme von Reizen aus der Umgebung der Tiernachbildung (34) vorgesehen sind, insbesondere zur Aufnahme von Geräuschen, streicheln und/oder schlagen, wobei die Datenverarbeitungsanlage derart ausgebildet ist, daß diese in Abhängigkeit von Sensordaten entsprechende Reaktionen und/oder Veränderungen von simulierten Bedürfnissen der Tiernachbildung (34) automatisiert auslöst.

13. Datenverarbeitungsanlage nach wenigstens einem der Ansprüche 1 bis 4, **dadurch gekennzeichnet, daß** das bewegbare Spielzeug (12; 34) ein mechanisches Spielzeug, insbesondere eine Puppe oder ein ferngesteuertes Fahrzeug, beispielsweise RC-Car, ist.

14. Datenverarbeitungsanlage nach wenigstens einem der vorhergehenden Ansprüche, **dadurch gekennzeichnet, daß** die Schnittstelle bzw. die Einrichtung (28; 36) zum Verbinden mit dem Spielzeug eine drahtgestützte und/oder funkgestützte Datenverbindung umfaßt.

15. Datenverarbeitungsanlage nach wenigstens einem der vorhergehenden Ansprüche, **dadurch gekennzeichnet, daß** diese als Mobiltelefon (10) ausgebildet ist, wobei als Datenverarbeitungsprogramm ein Betriebssystem des Mobiltelefons (10) vorgesehen ist.

16. Datenverarbeitungsanlage nach wenigstens einem der Ansprüche 1 bis 14,
**dadurch gekennzeichnet, daß** diese als Spielcomputer, insbesondere Spielkonsole oder Gameboy®, ausgebildet ist, wobei als Datenverarbeitungsprogramm ein Spielprogramm vorgesehen ist.

17. Spielzeug (12; 34), insbesondere mechanisches Spielzeug, welches mit einer Steuereinrichtung verbunden ist, mittels derer das Spielzeug (12; 34) von
einem Benutzer bewegbar ist,
**dadurch gekennzeichnet,**
**daß** die Steuereinrichtung als Datenverarbeitungsanlage gemäß wenigstens einem der vorhergehenden Ansprüche ausgebildet ist.

## Claims

1. Data processing system for running a data processing program, having an input device (30) for user inputs and an output device (32) for outputting data to the user, the data processing system having a means (28, 34) of making a connection to a real toy (12, 34), the real toy (12, 34) being able to be moved by means of a control means, and the data processing system, together with the data processing program, being designed to form a manual control means, for the moving toy (12, 34), which can be controlled by means of user inputs at the input device (30), **characterised in that** the data processing system and the data processing program are so designed that a simulation of a virtual environment and/or of virtual parameters of the moving toy (12, 34), combined with a game sequence to be played through by the user, is made available on the output device (32), the game sequence taking place by means of the input device (30) as a function of user inputs and feedback messages from the movable toy (12, 34) and including real movements of the movable toy (12, 34).

2. Data processing system according to claim 1,
**characterised in that** the output device (32) is a graphics screen and in particular a flat, liquid crystal or TFT screen.

3. Data processing system according to claim 1,
**characterised in that** it is designed to be portable.

4. Data processing system according to at least one of the foregoing claims, **characterised in that** the real moving toy (12, 34) imitates something which really exists and the simulation simulates a real environment and/or real parameters of what is imitated.

5. Data processing system according to at least one of the foregoing claims, **characterised in that** the toy is a toy racing circuit (12) having drivable toys able to be moved thereon, the virtual environment imitating real race occurrences and the virtual parameters imitating real parameters of racing cars.

6. Data processing system according to claim 5, **characterised in that** the virtual environment comprises various racing teams, various racing circuits, meteorological parameters, lap counters, finding of sponsors, qualifying races for racing licences, practice races, competitive races, pit teams, repairs to the racing car and/or pit stops for the racing car.

7. Data processing system according to claim 5 or 6, **characterised in that** the virtual parameters comprise damage to the racing car and particularly engine faults, wear to the racing car and particularly tyre wear and/or brake pad wear, consumption of consumables by the racing car and particularly petrol consumption and oil consumption, and/or the configuration of the racing car, particularly in respect of brakes, engine, gearbox, clutch, differential, suspension, stabilisers, tyres and/or aerofoils.

8. Data processing system according to at least one of claims 5 to 7, **characterised in that** sensors are provided to pick up effects on the drivable toy from the environment, and in particular to pick up distance driven, speed, accidents, the mobile telephone (10), the data processing system or the games computer being so designed that, as a function of data from the sensors, it changes corresponding virtual parameters by an automated process.

9. Data processing system according to at least one of claims 1 to 4, **characterised in that** the toy is an imitation animal (34), and in particular a dog, the virtual environment simulating a real environment of the animal (34) which is imitated and the virtual parameters simulating real needs of the animal (34) which is imitated.

10. Data processing system according to claim 9, **characterised in that** the virtual parameters comprise hunger, thirst, eating, drinking, the urge to move, excretion by the animal, the need to play, health, the need to sleep.

11. Data processing system according to claim 9 or 10, **characterised in that** the data processing system is so designed that, by an automated process, as a function of needs of the imitation animal (34) which are simulated at the time, it triggers corresponding reactions by the imitation animal (34) and in particular howling, moving the head, drinking, eating, walking, running, barking, lifting the leg for the imitation animal to excrete, wagging of the tail, whimpering and/or sleeping.

12. Data processing system according to at least one of claims 9 to 11, **characterised in that** sensors are provided to pick up stimuli from the environment of the imitation animal (34), and particularly to pick up noises, stroking and/or hitting, the data processing system being so designed that, by an automated process, as a function of data from the sensors, it triggers corresponding reactions by, and/or changes in simulated needs of, the imitation animal (34).

13. Data processing system according to at least one of claims 1 to 4, **characterised in that** the movable toy (12, 34) is a mechanical toy and in particular a doll or a remotely controlled vehicle, such as a radio controlled car for example.

14. Data processing system according to at least one of the foregoing claims, **characterised in that** the interface or the means (28, 36) of making a connection to the toy comprises a wire-based and/or radio based data link.

15. Data processing system according to at least one of the foregoing claims, **characterised in that** it is designed as a mobile telephone (10), an operating system for the mobile telephone (10) being provided as a data processing program.

16. Data processing system according to at least one of claims 1 to 14, **characterised in that** it is designed as a games computer and in particular a games console or Gameboy®, a games program being provided as a data processing program.

17. Toy (12, 34), in particular a mechanical toy, which is connected to a control means by means of which the toy (12, 34) can be moved by a user, **characterised in that** the control means takes the form of a data processing system according to at least one of the foregoing claims.

## Revendications

1. Installation de traitement de données pour exécuter un programme de traitement de données, comportant un dispositif d'entrée (30) pour des entrées utilisateur et un dispositif de sortie (32) pour fournir des données à l'attention de l'utilisateur, l'installation de traitement des données présentant un dispositif (28 ; 34) pour établir une liaison avec un jouet réel (12 ; 34), le jouet réel (12,: 34) mobile via un dispositif de commande, et l'installation de traitement de données étant réalisée avec le programme de traitement de données sous forme de dispositif de commande de l'objet (12 ; 34) en mouvement, manuel et commandable par des entrées utilisateur sur le dispositif d'entrée (30),
**caractérisée en ce que**
l'installation de traitement de données ainsi que le programme de traitement de données sont réalisés de telle sorte que sur le dispositif de fourniture (32) est mise à la disposition une simulation d'un environnement virtuel et/ou de paramètres virtuels du jouet en mouvement, en combinaison avec un déroulement de jeu pour que l'utilisateur puisse le exécuter le jeu, le déroulement du jeu ayant lieu via le dispositif d'entrée (30) en fonction des entrées utilisateur et des messages de retour de la part du jouet mobile (12 ; 34) et tenant compte de mouvements réels du jouet mobile (12 ; 34).

2. Installation de traitement de données selon la revendication 1,
**caractérisée en ce que** l'unité de sortie (32) est un écran graphique, en particulier un écran plat, à cristaux liquides ou TFT.

3. Installation de traitement de données selon la revendication 1,
**caractérisée en ce que** celle-ci est réalisée portable.

4. Installation de traitement de données selon au moins l'une quelconque des revendications précédentes, **caractérisée en ce que** le jouet réel (12 ; 34) en mouvement reproduit quelque chose qui existe réellement, et la simulation simule un environnement réel et/ou des paramètres réels de ce qui est reproduit.

5. Installation de traitement de données selon au moins l'une quelconque des revendications précédentes, **caractérisée en ce que** le jouet est un circuit jouet (12) avec des jouets mobiles sur celui-ci, l'environnement virtuel reproduisant un déroulement de course réel et les paramètres virtuels reproduisant des paramètres réels de voitures de course.

6. Installation de traitement de données selon la revendication 5,
**caractérisée en ce que** l'environnement virtuel comprend différentes écuries de course, différents parcours, paramètres météorologiques, compte-tours, différentes recherches de sponsors, courses de qualifications pour des licences de course, courses d'entraînement, courses finales, équipes de stands de ravitaillement, réparations de la voiture de course et/ou arrêts de stand de ravitaillement de la voiture de course.

7. Installation de traitement de données selon la revendication 5 ou 6,
**caractérisée en ce que** les paramètres virtuels comprennent des dommages sur la voiture de course, en particulier des pannes de moteur, de l'usure sur la voiture de course, en particulier de l'usure de pneus et/ou de l'usure de garnitures de freins, la consommation de carburant par la voiture de course, en particulier la consommation en essence, la consommation en huile, et/ou la configuration de la voiture de course, en particulier en ce qui concerne les freins, le moteur, la boîte de vitesse, l'embrayage, le différentiel, les amortisseurs, les stabilisateurs, les pneus et/ou les ailes.

8. Installation de traitement de données selon au moins l'une des revendications 5 à 7, **caractérisée en ce que** des capteurs sont prévus pour la réception d'effets agissant depuis l'environnement sur le jouet roulant, en particulier pour le trajet parcouru, la vitesse, les accidents, le téléphone portable (10), l'installation de traitement de données ou l'ordinateur de jeu étant réalisé(e) de telle sorte que celui-ci/celle-ci modifie de manière automatique des paramètres virtuels correspondants en fonction de données de capteur.

9. Installation de traitement de données selon au moins l'une des revendications 1 à 4, **caractérisée en ce que** le jouet est une réplique d'animal (34), en particulier un chien, l'environnement virtuel simulant un environnement réel de l'animal (34) reproduit et l'environnement virtuel simulant des besoins réels de l'animal (34) reproduit.

10. Installation de traitement de données selon la revendication 9,
**caractérisée en ce que** les paramètres virtuels comprennent la faim, la soif, la nourriture, la boisson, le besoin de mouvement, le soulagement de l'animal, le besoin de jouer, la santé, le besoin de sommeil.

11. Installation de traitement de données selon la revendication 9 ou 10,
**caractérisée en ce que** l'installation de traitement de données est réalisée de telle sorte que celle-ci déclenche de manière automatique, en fonction de besoins momentanément simulés de la réplique d'animal (34) des réactions correspondantes de la réplique d'animal (34), en particulier glapir, bouger la tête, boire, manger, marcher, courir, aboyer, lever la patte pour le soulagement de la réplique d'animal, remuer la queue, gémir et/ou dormir.

12. Installation de traitement de données selon au moins l'une des revendications 9 à 11, **caractérisée en ce que** des capteurs sont prévus pour la réception d'excitations provenant de l'environnement de la réplique d'animal (34), en particulier pour la réception de bruits, de caresses et/ou de coups, l'installation de traitement de données étant réalisée de telle sorte que celle-ci déclenche automatiquement en fonction de données de capteurs des réactions correspondantes et/ou des modifications de besoins simulés de la réplique d'animal (34).

13. Installation de traitement de données selon au moins l'une des revendications 1 à 4, **caractérisée en ce que** le jouet mobile (12 ; 34) est un jouet mécanique, en particulier une poupée ou un véhicule télécommandé, par exemple un véhicule radio commandé (RC-car).

14. Installation de traitement de données selon au moins l'une quelconque des revendications précédentes, **caractérisée en ce que** l'interface ou le dispositif (28 ; 36) pour établir la liaison avec le jouet comprend une connexion de données assistée par câble et/ou par radio.

15. Installation de traitement de données selon au moins l'une quelconque des revendications précédentes, **caractérisée en ce que** celle-ci est réalisée sous forme de téléphone portable (10), un système d'exploitation du téléphone portable (10) étant prévu à titre de programme de traitement de données.

16. Installation de traitement de données selon au moins l'une quelconque des revendications 1 à 14, **caractérisée en ce que** celle-ci est réalisée sous forme d'ordinateur de jeu, en particulier sous forme de console de jeu ou de gameboy ®, un programme de jeu étant prévu à titre de programme de traitement de données.

17. Jouet (12 ; 34), en particulier jouet mécanique qui est relié à un dispositif de commande au moyen duquel le jouet (12 ; 34) peut être rendu mobile par un utilisateur,
**caractérisé en ce que** le dispositif de commande est réalisé sous forme d'installation de traitement de données selon au moins l'une des revendications précédentes.
